# EUROPÄISCHE PATENTSCHRIFT

(11) **EP 2 837 739 B1**
(45) Veröffentlichungstag und Bekanntmachung des Hinweises auf die Patenterteilung: **14.06.2017**
(21) Anmeldenummer: 13004086.8
(22) Anmeldetag: 16.08.2013
(51) Int. Cl.: E01C 19/48

(54) **Straßenfertiger mit Schubvorrichtung**
Road finisher with pushing device
Finisseuse de route dotée d'un dispositif de poussage

(43) Veröffentlichungstag der Anmeldung: 18.02.2015
(73) Patentinhaber: Joseph Vögele AG, 67067 Ludwigshafen (DE)
(72) Erfinder: Gotterbarm, Tobias, 67117 Limburgerhof (DE); Schmidt, Thomas, 68723 Plankstadt (DE)
(74) Vertreter: Grünecker Patent- und Rechtsanwälte PartG mbB

(56) Entgegenhaltungen:
- EP-A1- 2 527 534
- DE-A1- 2 243 076
- DE-A1-102011 120 161
- US-A- 5 004 394

## Beschreibung

Die Erfindung bezieht sich auf einen Straßenfertiger gemäß dem Oberbegriff des Anspruchs 1.

Ein solcher Straßenfertiger wird in der Praxis verwendet, um an einen LKW zur Materialübergabe anzudocken. Dabei ist es wichtig, dass vom Materiallieferfahrzeug keine ruckartigen Beschleunigungen auf den Straßenfertiger übertragen werden, was nämlich zu Beschädigungen im Einbau führen könnte. Folglich werden in der Praxis Straßenfertiger eingesetzt, die an ihrem Chassis in Fertigungsrichtung gesehen vorne eine Schubvorrichtung aufweisen, mit welcher sie das Andocken eines Materiallieferfahrzeugs abfedern können.

Die EP 2 527 534 A1 der Anmelderin offenbart einen Straßenfertiger mit einer beweglich am Chassis gelagerten Schubvorrichtung, die vorzugsweise als Dämpfungsmittel mindestens eine Reibungsfeder umfasst. Mit dieser gelingt das Abdämpfen eines andockenden LKWs daran gut, wobei sich herausgestellt hat, dass eine mit einer Reibungsfeder hergestellte Dämpfereinheit kostspielig ist.

Die DE 10 2011 120 161 A1 offenbart einen Straßenfertiger mit einer beweglich am Chassis gelagerten Schubvorrichtung, welche durch mindestens einen Elastomerstrukturdämpfkörper federnd gelagert ist. Nachteilig daran ist jedoch, dass der Elastomerstruktur-dämpfkörper leicht schmutzempfänglich ist und durch die auf der Baustelle vorherrschende Hitze bzw. Sonneneinstrahlung verspröden kann. Kommt es erst einmal zur Versprödung des Elastomerstrukturdämpfkörpers, verschlechtern sich auch seine Dämpfeigenschaften.

Die US 5,004,394 A offenbart einen Straßenfertiger mit einer daran gelagerten Schubvorrichtung, die relativ zum Chassis des Straßenfertigers gemäß einer ersten Ausführungsform mittels einer Blattfeder gedämpft gelagert ist. Bei einer weiteren Ausführungsform ist die Schubvorrichtung an zwei Hydraulikzylindern befestigt. Die Hydraulikzylinder sind jeweils an einen Hydraulikkreislauf angeschlossen, welcher den Hydraulikzylindern von außen ein Hydraulikmedium zuführt, bzw. das Hydraulikmedium aus den Hydraulikzylindern entnimmt. Nachteilig daran ist, dass der Hydraulikkreislauf kompliziert aufgebaut ist sowie viel Platz auf dem Straßenfertiger beansprucht. Ebenfalls müssen die im Hydraulikkreislauf eingeschalteten Komponenten, bspw. die Hydraulikpumpe oder die Verstellventile, regelmäßig gewartet werden. Eine solche Schubvorrichtung ist teuer in der Herstellung und lässt sich nur schwer an bestehenden Straßenfertigern nachrüsten.

DE 22 43 076 A1 offenbart ein Dämpfersystem mit einer Stoßstange, die an Dämpfern befestigt ist, wobei die Dämpfer miteinander über Fluidleitungen verbunden sind sowie jeweils an einen Hydraulikkreislauf angeschlossen sind. In den Dämpfern ist jeweils ein Gasraum vorgesehen, der zum Ausgleich einer Volumensänderung dient, wenn Kolben in die Dämpfer eingeschoben werden.

EP 2 527 534 A1 offenbart eine Schubvorrichtung, bei welcher als Dämpfmittel mindestens eine Federdämpfereinheit eingesetzt wird, die gemäß einer bevorzugten Ausführungsform eine Reibungsfeder aufweist.

Daher liegt der Erfindung die objektive Aufgabe zugrunde, einen Straßenfertiger dahingehend zu verbessern, dass das Andocken an ein Materiallieferfahrzeug, insbesondere einen LKW, so abgedämpft werden kann, dass keine ruckartigen Stöße beim Andocken und während der Materialübergabe auf den Straßenfertiger übertragen werden, wobei die dafür eingesetzten Mittel einfach herstellbar und ohne viel Platz in Anspruch zu nehmen am Straßenfertiger anbaubar sind.

Diese Aufgabe wird gelöst mit den Merkmalen des Anspruchs 1 bzw. mittels eines Verfahrens gemäß Anspruch 19. Verbesserte Weiterbildungen der Erfindung sind Gegenstand der Unteransprüche.

Erfindungsgemäß ist ein Straßenfertiger mit einer Schubvorrichtung vorgesehen, die mindestens eine Andockbaugruppe und mindestens eine Dämpfereinheit aufweist. Die Dämpfereinheit ist am Chassis des Straßenfertigers befestigt und hat mindestens eine Kolbenzylindereinheit, die einen Zylinder und einen daran verschiebbaren Arbeitskolben aufweist, welcher die Kolbenzylindereinheit in mindestens eine erste und eine zweite Kammer unterteilt und mit der Andockbaugruppe gekoppelt ist. Die Andockbaugruppe ist durch den verschiebbar gelagerten Arbeitskolben relativ zum Chassis zwischen einer Aus-schubstellung und mindestens einer Einschubstellung positionierbar. Gemäß der Erfindung ist in der Kolbenzylindereinheit mindestens ein Strömungskanal zwischen der ersten und der zweiten Kammer zum Durchströmen für ein in der Kolbenzylindereinheit eingeschlossenes Fluid vorgesehen, wobei das Fluid in der Ausschubstellung vorgespannt ist.

Außerdem kann die Erfindung auch in einem Beschickerfahrzeug mit der hierin beschriebenen Schubvorrichtung gesehen werden.

Dadurch, dass bei der Erfindung auf das Fluid bereits in der Ausschubstellung eine Vorspannkraft, d.h. eine Kompressionskraft wirkt, bleibt der Arbeitskolben solange in der Ausschubstellung, bis eine von außen auf die Andockbaugruppe drückende Kraft, bspw. durch einen andockenden LKW, diese Kompressionskraft übersteigt. Die in der Ausschubstellung vorherrschende Kompressionskraft, hervorgerufen durch den auf den Arbeitskolben wirkenden Druck des komprimierten Fluids, ist auch gleichzeitig die minimale Rückstellkraft, die benötigt wird, um den Arbeitskolben aus einer Einschubstellung zurück in die Ausschubstellung zu bringen.

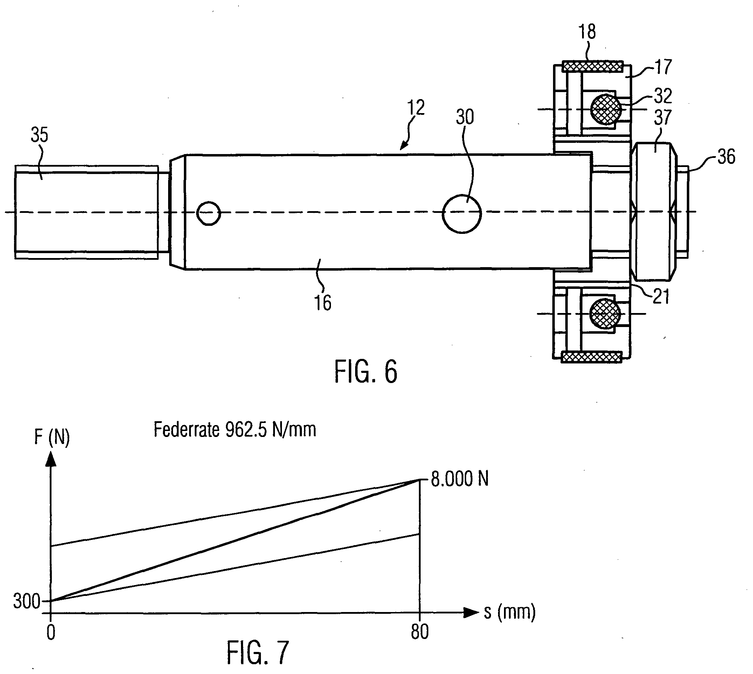

Wird bei der Erfindung im Betrieb von außen auf die am Straßenfertiger angebrachte Schubvorrichtung eine Kraft, bspw. durch einen andockenden LKW, aufgebracht, die der in der Kolbenzylindereinheit vorherrschenden Kompressionskraft entgegenwirkt und diese übersteigt, dann wird der Arbeitskolben in das vorkomprimierte Fluid gedrückt. Weil das vorkomprimierte Fluid nicht aus der geschlossenen Kolbenzylindereinheit verdrängbar ist, strömt es zwangsweise durch den Strömungskanal, welcher in der Kolbenzylindereinheit vorgesehen ist. Das Einfahren des Arbeitskolbens in das vorkomprimierte Fluid bedingt durch das Volumen des einfahrenden Arbeitskolbens eine zusätzliche Komprimierung des Fluids, weil dieses in dem Zylinder der Kolbenzylindereinheit eingesperrt ist und diese nicht verlassen kann. Diese zusätzliche Komprimierung sorgt für einen Kompressionskraftanstieg entlang des Dämpfungsweges und ergibt die Federrate R, welche mit Bezugnahme auf Figur 7 später noch beschrieben wird.

Die höchste Kompressionskraft innerhalb der Kolbenzylindereinheit ist erreicht, wenn der Arbeitskolben in seiner Einschubbewegung zum Stillstand kommt. Während ein Teil der von außen auf die Schubvorrichtung wirkenden Kraft in Reibung und Wärme umgewandelt wird, ist der Rest als Kompressionsdruck im Fluid innerhalb der Kolbenzylindereinheit gespeichert.

Der in der Einschubstellung vorliegende Kompressionsdruck auf den Arbeitskolben bewirkt, dass der Arbeitskolben gegen die von außen aufgebrachte Last drückt und schließlich wieder in seine Ausschubstellung zurückkehrt, wenn die von außen wirkende Kraft nachlässt.

Beim Rückstellen des Arbeitskolbens strömt das Fluid wieder durch den Strömungskanal, wodurch die überschüssig, zusätzlich aufgebaute Kompressionsenergie langsam abgebaut werden kann. Letztendlich wird dabei von dem komprimierten Fluid soviel Energie abgegeben, wie zur Rückstellung des Arbeitskolbens gebraucht wird. Wenn der Arbeitskolben wieder in seiner Ausgangsposition, d.h. in der Ausschubstellung ist (Position wie vor dem Einfahren), dann liegt an ihm wieder die ursprünglich vorgespannte Kompressionskraft an. Die Schubvorrichtung ist dann wieder einsatzbereit.

Die Erfindung betrifft auch ein Verfahren zum Dämpfen einer Last, die auf eine Schubvorrichtung eines Straßenfertigers wirkt, wobei auf einen Arbeitskolben einer geschlossenen Kolben-Zylinder-Dämpfereinheit in Ausschubstellung eine von einem in der Dämpfereinheit eingeschlossenen Fluid verursachte Vorspannkraft wirkt, welche den Arbeitskolben in Richtung der Ausschubstellung drückt, wobei der Arbeitskolben von einer Last, die der Vorspannkraft entgegenwirkt und diese übersteigt in die Dämpfereinheit gedrückt wird, sodass die im Fluid vorhandene Vorspannkraft ansteigt, und wobei das Fluid durch mindestens einen in der Kolben-Zylinder-Dämpfereinheit vorgesehenen Strömungskanal strömt, sodass es von einer ersten Kammer, in welcher das Fluid nahezu vollständig in der Ausschubstellung ist, in eine zweite Kammer der Kolben-Zylinder-Dämpfereinheit verdrängt wird, welche dadurch entsteht, dass der Arbeitskolben in die Kolben-Zylinder-Dämpfereinheit einfährt, wobei der Arbeitskolben selbsttätig wieder in die Ausschubstellung zurückkehrt, wenn die Last auf den Arbeitskolben nachläßt. Der Arbeitskolben wird bei Entfernen der Last langsam in die Ausschubstellung zurückgefahren.

Vorzugsweise handelt es sich bei dem vorgespannten Fluid um ein hochkompressibles Fluid, insbesondere eine Flüssigkeit, wie bspw. ein Silikonöl. Das Silikonöl bietet hervorragende Kompressionseigenschaften und lässt sich auf ca. 20 % des vorhandenen Volumens komprimieren. Durch die Kompressionsfähigkeit des Silikonöls ist es möglich, sehr starke Dämpfereinheiten mit geringen Abmessungen herzustellen. Gemäß einer besonderen Ausführungsform ist das Silikonöl ein Polydimethylsiloxan (PDMS), welches über eine hohe Kompressionsfähigkeit verfügt und auch über hervorragende Schmiereigenschaften verfügt.

Vorteilhaft ist es auch, wenn der Strömungskanal, bzw. eine Vielzahl von Strömungskanälen, in dem Arbeitskolben ausgebildet ist. Vorzugsweise ist der Strömungskanal in einer Kolbenplatte des Arbeitskolbens vorgesehen. Der Strömungskanal kann in der Kolbenplatte entlang eines Verstellweges des Arbeitskolbens ausgerichtet sein, wobei es ebenfalls vorstellbar ist, dass der Strömungskanal in der Kolbenplatte schräg ausgebildet ist, um die Durchströmungsstrecke für das Fluid zu verlängern. Dadurch ist es möglich, unterschiedliche Dämpfgrade bzw. Dämpfgeschwindigkeiten zu erreichen.

Gemäß einer weiteren Ausführungsform der Erfindung ist in der Kolbenzylindereinheit mindestens ein Einwegeventil, d.h. ein Rückschlagventil, zum Durchströmen für das in der Kolbenzylindereinheit eingeschlossene Fluid vorgesehen, wenn der Arbeitskolben in Richtung der Einschubstellung drückt. Wird der Arbeitskolben in Richtung der Ausschubstellung zurückgestellt, dann schließt das Einwegeventil ab und verhindert ein Durchströmen des Fluids, sodass das Fluid nur durch den Strömungskanal hindurchströmen kann. Dies bedingt den Effekt, dass einem Einschieben des Arbeitskolbens in den Zylinder in Richtung der Einschubstellung ein geringerer Widerstand dem Arbeitskolben entgegenwirkt, als beim Zurückkehren des Arbeitskolbens in Richtung der Ausschubstellung. Dies hat den Vorteil, dass die erfindungsgemäße Dämpfereinheit bzw. die Schubvorrichtung beim erfindungsgemäßen Straßenfertiger hervorragend Stöße einer Andockenden Last, bspw. eines LKWs absorbieren kann, und die Andockbaugruppe langsam in die Ausschubstellung zurückkehren kann, wodurch keine Beschleunigungen auf den Straßenfertiger übertragen werden.

Insbesondere kann es gewünscht sein, dass das Einwegeventil mehr Fluid durchlässt, als der Strömungskanal, wenn der Arbeitskolben in Richtung der Einschubstellung drückt. Dies ermöglicht ein schnelles und weiches Einfedern des Arbeitskolbens in das vorgespannte Fluid.

Vorzugsweise ist es möglich, dass eine Durchflussmenge durch das Einwegeventil und/oder den Strömungskanal variierbar ist, beispielsweise durch eine Stellschraube. Bei einer solchen Ausführungsform ist es nützlich, das Einwegeventil und/oder den Strömungskanal im Zylinder der Dämpfereinheit vorzusehen, damit die Stellschraube gut von außen zugänglich ist. Dadurch ließe sich die Dämpfereinheit für unterschiedliche Lasten anpassen.

Eine weitere Ausführungsform der Erfindung sieht vor, dass die Kolbenzylindereinheit einen Führungsabschnitt mit einem Führungskolben aufweist, der auf dem Arbeitskolben befestigt ist. Der Führungsabschnitt sorgt dafür, dass der Arbeitskolben genau und wiederholt gleichmäßig innerhalb der Kolbenzylindereinheit verstellbar ist. Der Arbeitskolben kann durch den Führungsabschnitt selbst dann hervorragend geführt werden, wenn von außen auf die Schubvorrichtung große Lasten ungleichmäßig verteilt wirken.

Damit der Führungskolben innerhalb des Führungsabschnitts gut gleiten kann, ist vorzugsweise im Führungsabschnitt mindestens eine Entlüftungsbohrung vorgesehen. Durch diese kann Luft entweichen bzw. angesaugt werden, wenn der Führungskolben in eine Einschubstellung verfährt bzw. aus dieser in seine Ausgangslage zurückkehrt. Die Entlüftungsbohrung kann bspw. in einer Außenwand des Führungsabschnitts vorgesehen sein, welche als Verlängerung des Zylinders der Kolbenzylindereinheit ausgebildet ist. Alternativ dazu, bzw. ergänzend kann die Lüftungsbohrung auch in dem Führungskolben vorgesehen sein, um beim Einfahren des Arbeitskolbens Luft aus dem Führungsabschnitt nach draußen abzulassen.

Vorzugsweise ist im Arbeitskolben eine Montagebohrung vorgesehen, um den Arbeitskolben für das Montieren des Führungskolbens darauf zu fixieren. Gemäß einer weiteren Ausführungsform ist in einer Außenwand des Führungsabschnitts eine weitere Bohrung, vorzugsweise eine Gewindebohrung vorgesehen, welche in der Ausschubstellung mit der im Arbeitskolben vorgesehenen Montagebohrung fluchtet, sodass ein Fixierungsstift durch diese Bohrungen durchgesteckt werden kann, um den Arbeitskolben zur Montage des Führungskolbens zu fixieren. So ist es möglich, den Führungskolben fest auf dem Arbeitskolben zu befestigen. Gegebenenfalls kann der Führungskolben durch einen Spannstift auf dem Arbeitskolben fixiert und ausgerichtet sein.

Gemäß einer bevorzugten Ausführungsform weist der Führungsabschnitt eine Führungsbuchse auf, innerhalb welcher der Führungskolben verschiebbar ist. Die Führungsbuchse kann gemäß einer Ausführungsform zumindest teilweise aus Polyoxymethylen (POM) hergestellt sein, wodurch der Führungskolben gut in der Führungsbuchse gleiten kann.

Damit die Führungsbuchse nicht aus dem Führungsabschnitt rutscht, kann gemäß einer weiteren Ausführungsform ein Abstreifer im Führungsabschnitt vorgesehen sein, der die Führungsbuchse im Führungsabschnitt sichert. Der Abstreifer ist vorzugsweise am Rand des Führungsabschnitts vorgesehen, sodass er gut zugänglich ist und gut herausnehmbar ist, um ggf. die Führungsbuchse auszutauschen. Bevorzugterweise ist der Abstreifer mindestens teilweise aus einem thermoplastischen Elastomer hergestellt, wodurch er verbesserte Abriebeigenschaften enthält und an ihm der Führungskolben gut entlang gleiten kann.

Vorzugsweise herrscht in dem bereits vorgespannten Fluid ein Druck im Bereich von 30 bar - 120 bar, vorzugsweise von 70 bar - 110 bar, und insbesondere im Bereich von 80 bar - 100 bar. Dadurch ergeben sich hervorragende Dämpfeigenschaften mittels des vorgespannten Fluids.

Vorzugsweise weist die Kolbenzylindereinheit ein Kolbenlager auf, welches den Arbeitskolben führt. Der Zylinder ist durch das Kolbenlager und den Zylinderboden verschlossen. Für eine besonders feste Befestigung des Kolbenlagers am Zylinder der Kolbenzylindereinheit ist das Kolbenlager mittels eines Gewindes in den Zylinder geschraubt. Vorzugsweise ist im Kolbenlager ein Ventil vorgesehen, durch welches die Kolbenzylindereinheit mit dem Fluid befüllt werden kann.

Vorzugsweise ist am Straßenfertiger mindestens eine Sensoreinheit bzw. ein Sensor installiert, welcher eine Stellung der Schubvorrichtung überwacht. Dabei handelt es sich vorzugsweise um einen berührungslosen Sensor, der die Stellung der Andockbaugruppe relativ zum Chassis und/oder die Stellung des Arbeitskolbens und/oder die Stellung des Führungskolbens detektiert, um das Andocken eines LKWs zu erfassen. Der Sensor kann beispielsweise am Chassis direkt und/oder an der Schubvorrichtung, insbesondere jedoch an der Dämpfereinheit befestigt sein. Vorstellbar wäre es auch, dass alternativ oder ergänzend zur Sensoreinheit ein Sensor innerhalb der Dämpfereinheit vorgesehen ist, welcher dazu ausgebildet ist, den auf das Fluid wirkenden Druck zu erfassen, um in Relation dazu eine Stellung des Arbeitskolbens und somit auch den zurückgelegten Dämpfungsweg zu bestimmen.

Gemäß einer weiteren Ausführungsform der Erfindung sieht der Straßenfertiger eine Signalvorrichtung vor, welche funktional mit dem Sensor verbunden ist, um einem Bediener des Straßenfertigers anzuzeigen, ob ein LKW an der Schubvorrichtung zur Materialübergabe angedockt hat. Die Signalvorrichtung ist vorzugsweise im Bedienpult des Straßenfertigers vorgesehen und/oder an einem Außenbedienstand, der hinten an der Einbaubohle des Straßenfertigers dem Bedienpersonal als Steuerkonsole zur Verfügung steht. Ebenfalls ist es möglich, die Signalvorrichtung oder eine zusätzliche Signalvorrichtung an einem oder beiden Außenspiegeln des Straßenfertigers vorzusehen, um dem vorausfahrenden LKW-Fahrer den Andockzustand anzuzeigen. Beispielsweise kann die Signalvorrichtung eine Ampelanzeige aufweisen, die je nach Andockzustand in unterschiedlichen Farben aufleuchtet. Vorstellbar ist es auch, dass die Signalvorrichtung alternativ oder ergänzend zur optischen Anzeige auch akustische Signale ausgibt. Dies ermöglicht ein sicheres An- sowie Abdocken eines LKWs zur Materialübergabe an dem erfindungsgemäßen Straßenfertiger.

Eine weitere Ausführungsform der Erfindung sieht vor, dass je nach Stellung der Schubvorrichtung, insbesondere der Andockbaugruppe relativ zum Chassis des Straßenfertigers Manövrieranweisungen an den Straßenfertigerführer und/oder an den LKW-Fahrer mittels der Signalvorrichtung anzeigbar sind. Beispielsweise könnte die Signalvorrichtung über eine gesonderte optische und/oder akustische Signalgebung verfügen, mittels welcher sie dem Fertigerführer und/oder dem LKW-Fahrer anzeigen kann, dass die Schubvorrichtung beziehungsweise die Andockbaugruppe schräg relativ zum Chassis gestellt ist, was so viel heißt, dass der LKW schräg an den Straßenfertiger angedockt hat. Infolgedessen kann der LKW-Fahrer ein entsprechendes Ausgleichmanöver mit dem LKW durchführen, um den LKW genau in Fertigungsrichtung des Straßenfertigers auszurichten. Dadurch ist es möglich, dass das Einbaumaterial gleichmäßig in den Gutbunker geschüttet wird und die Schubvorrichtung beim Andocken parallel zum Chassis verschoben wird, so dass Andockkräfte optimal abgedämpft werden können.

Eine andere Ausführungsform der Erfindung sieht vor, dass der Straßenfertiger derart konfiguriert ist, dass mindestens ein Einbauparameter und/oder mindestens eine Einbauantriebsstellung automatisch aus einem Einbaumodus in einen Andockmodus wechselt, sobald der LKW an der Schubvorrichtung angedockt hat und/oder die Schubvorrichtung, insbesondere die Andockbaugruppe eine vorbestimmte Andockstellung einnimmt. Beispielsweise ist es vorstellbar, dass der Straßenfertiger seine Einbaufahrt unterbricht. Andererseits ist es auch möglich, dass es lediglich zu einer Verlangsamung mindestens einer Einbaudrehzahl und/oder -geschwindigkeit während der Einbaufahrt kommt und/oder mindestens ein Linearantrieb aus einer Einbaustellung in eine Andockstellung verfährt, wenn ein LKW angedockt hat. Ebenso ist es auch möglich, dass der erfindungsgemäße Straßenfertiger automatisch von dem Andockmodus wieder zurück in den normalen Einbaumodus geht, wenn mittels der Signalvorrichtung erkannt wird, dass der LKW von der Schubvorrichtung abgedockt hat. Diese automatische Anpassung unterschiedlicher Parameter beziehungsweise Antriebsstellungen des Straßenfertigers während des Andockbetriebs sorgt dafür, dass ein optimales Einbauergebnis entsteht und im beziehungsweise auf dem Straßenbelag keinerlei sichtbare Spuren durch den Andockvorgang zurückbleiben.

Ausführungsformen der Erfindung werden anhand der folgenden Figuren erläutert.

Es zeigen:
- Fig. 1: einen Straßenfertiger mit einer Schubvorrichtung zum Andocken an einen LKW,
- Fig. 2: eine vergrößerte Perspektivdarstellung der Schubvorrichtung zum Andocken an einen LKW,
- Fig. 3: eine erfindungsgemäße Dämpfereinheit in Ausschubstellung,
- Fig. 4: eine erfindungsgemäße Dämpfereinheit in Einschubstellung,
- Fig. 5: eine Ausführungsform der erfindungsgemäßen Dämpfereinheit,
- Fig. 6: Arbeitskolben der erfindungsgemäßen Dämpfereinheit und
- Fig. 7: ein charakteristisches Kraft-Weg-Diagramm der erfindungsgemäßen Dämpfereinheit.

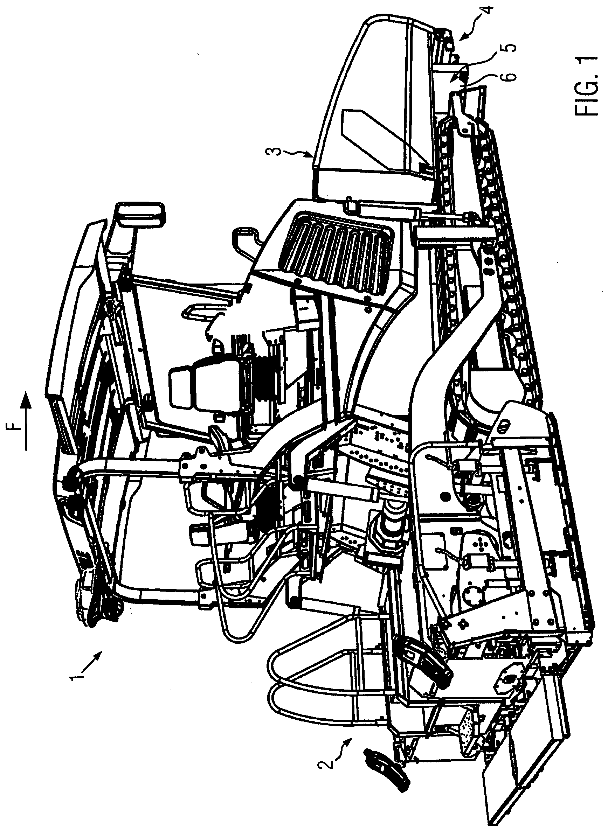

Figur 1 zeigt einen Straßenfertiger 1 mit einer Einbaubohle 2 und einem in Fertigungsrichtung F vorne vorgesehenen Gutbunker 3 zur Aufnahme von Einbaugut. Vor dem Gutbunker 3 ist eine Schubvorrichtung 4 gemäß der Erfindung angeordnet. Die Schubvorrichtung 4 ist am Chassis 5 des Straßenfertigers 1 gelagert. Insbesondere ist die Schubvorrichtung 4 an einer Quertraverse 6 des Chassis 5 befestigt.

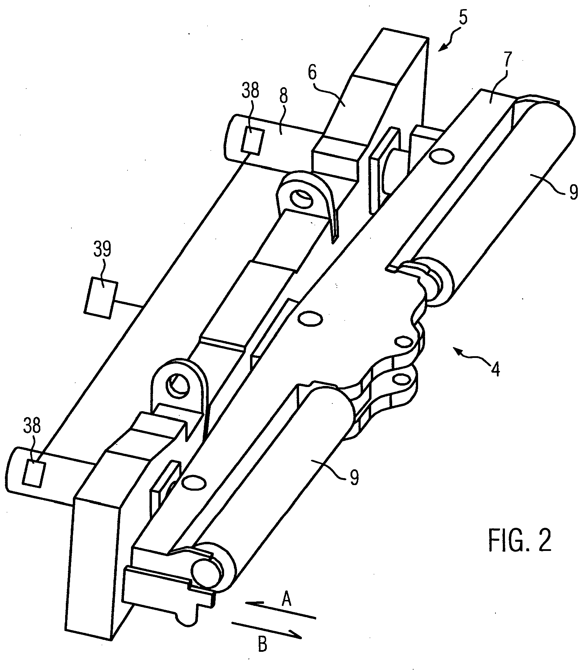

Figur 2 zeigt die Schubvorrichtung 4 getrennt vom Straßenfertiger 1 in einer vergrößerten Perspektivdarstellung. Die Schubvorrichtung 4 weist eine Andockbaugruppe 7 und eine erste sowie eine zweite Dämpfereinheit 8 auf. Die beiden Dämpfereinheiten 8 sind an der Quertraverse 6 des Chassis 5 befestigt. Die Andockbaugruppe 7 ist relativ zur Quertraverse 6 des Chassis 5 beweglich gelagert. Die Andockbaugruppe 7 kann auf die Quertraverse 6 zu bzw. von dieser wegbewegt werden. Wirkt von vorne einseitig eine Last L auf die Andockbaugruppe 7, dann kann diese relativ zur Quertraverse 6 auch schräg gestellt werden, wie dies in der Figur 2 gezeigt wird.

Gemäß der Figur 2 ist die Andockbaugruppe 7 als Querbalken ausgebildet, der zwei drehbare Schubrollen 9 trägt. Die Schubrollen 9 können an Hinterreifen eines LKWs andocken, der in den Gutbunker 3 des Straßenfertigers 1 Einbaugut schüttet. Eine solche Materialübergabe ist dank der erfindungsgemäßen Schubvorrichtung während einer Einbaufahrt möglich, ohne dass in der Einbaustrecke Einbaufehler entstehen.

Figur 2 zeigt auch schematisch eine Sensoreinheit 38, die funktional mit einer Signalvorrichtung verbunden ist. Die Sensoreinheit 38 ist dazu ausgebildet, eine Stellung der Schubvorrichtung 4 zu erfassen und an die Signalvorrichtung 39 weiterzugeben, von welcher eine Andockstellung und/oder Andockmanövrieranweisung an den Bediener des Straßenfertigers und/oder LKWs anzeigbar ist.

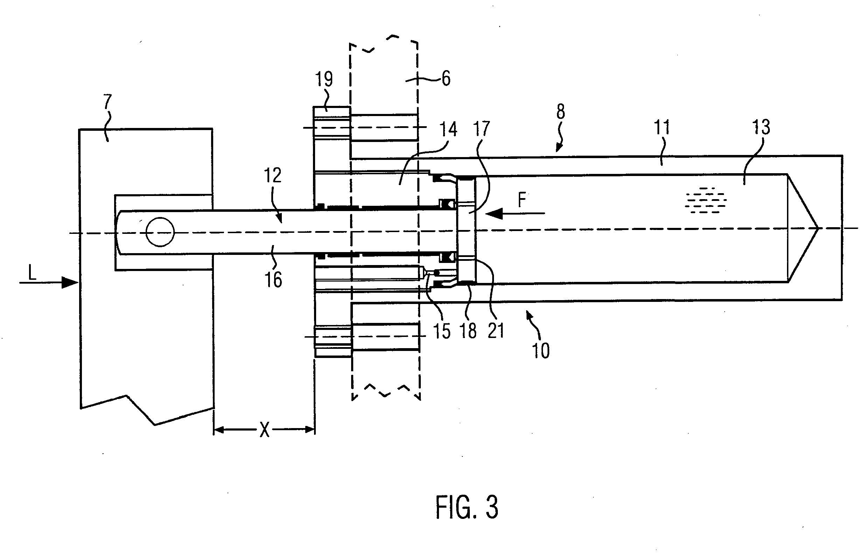

Figur 3 zeigt den Aufbau der erfindungsgemäßen Dämpfereinheit 8 in einer Ausschubstellung. Die Dämpfereinheit 8 ist in der Figur 3 an der Quertraverse 6 des Chassis 5 befestigt und hat eine Kolbenzylindereinheit 10. Die Kolbenzylindereinheit 10 ist ein geschlossener Differentialzylinder mit einem Zylinder 11 und einem Arbeitskolben 12, welcher im Zylinder 11 vorgespannt gelagert ist. Im Zylinder 11 ist ein vorkomprimiertes Fluid 13 vorgesehen, welches den Arbeitskolben 12 in der Ausschubstellung vorspannt. Das vorgespannte Fluid 13 drückt den Arbeitskolben 12 gegen ein Kolbenlager 14. Das Kolbenlager 14 ist in den Zylinder 11 geschraubt und schließt den Zylinder 11 nach außen hin ab.

Im Kolbenlager 14 ist ein Ventil 15 vorgesehen. Durch das Ventil 15 kann der Zylinder 11 der Kolbenzylindereinheit 10 mit dem Fluid 13 befüllt werden. Durch das Befüllen kann das Fluid 13 mit einem vorbestimmten Druck beaufschlagt werden, sodass es vorgespannt bzw. komprimiert im Zylinder 11 vorliegt und somit eine Kompressionskraft speichert, durch die der Arbeitszylinder 12 in der Ausschubstellung gehalten werden kann.

Der Arbeitskolben 12 hat eine Kolbenstange 16 und eine Kolbenplatte 17. Die Kolbenstange 16 wird im Kolbenlager 14 geführt und dichtet zusammen mit dem Kolbenlager 14 die Kolbenzylindereinheit 10 ab. Die Kolbenplatte 17 hat einen geringfügig kleineren Durchmesser als der Innendurchmesser des Zylinders 11, wobei umfangsseitig an der Kolbenplatte 17 eine Plattendichtung 18 vorgesehen ist. Die Plattendichtung 18 verhindert, dass das vorgespannte Fluid 13 bei einer Bewegung des Arbeitskolbens 12 in den Zylinder 11 hinein oder aus diesem heraus außen an der Kolbenplatte 17 vorbeifließt. Die Kolbenzylindereinheit 10 hat außerdem einen Befestigungsflansch 19, der zur Befestigung der Kolbenzylindereinheit 10 an der Quertraverse 6 des Chassis 5 vorgesehen ist.

Die Andockbaugruppe 7 ist an der Kolbenstange 16 des Arbeitskolbens 12 befestigt. Der Abstand zwischen der Anbaudockgruppe 7 und dem Befestigungsflansch 19 bildet einen Dämpfungsweg X. Die Figur 3 zeigt, dass die Andockbaugruppe in einer Ausschubstellung positioniert ist, bei welcher der Arbeitskolben 12 durch das vorgespannte Fluid 13 gegen das Kolbenlager 14 gedrückt wird. Wird der Arbeitskolben 12 durch eine an der Andockbaugruppe 7 von außen anliegende Kraft L in den Zylinder 11 gedrückt, bewegt sich die Anbaudockgruppe 7 auf den Befestigungsflansch 19 zu. Gleichzeitig steigt die durch das vorgespannte Fluid 13 im Zylinder 11 vorhandene Kompressionskraft an, weil das Volumen des Arbeitszylinders 12 im Zylinder 11 zunimmt.

Figur 3 zeigt auch, dass in der Kolbenplatte 17 zwei Strömungskanäle 21 vorgesehen sind. Wird der Arbeitskolben 12 in den Zylinder 11 hineingedrückt, fließt zwangsläufig das Fluid 13 durch die Strömungskanäle 21 hindurch. Dabei wird das Fluid aus der ersten Kammer rechts von der Kolbenplatte 17 in die zweite Kammer links von der Kolbenplatte 17 verdrängt. Wird der Arbeitskolben 12 zurückgestellt, strömt das Fluid 13 in die erste Kammer zurück.

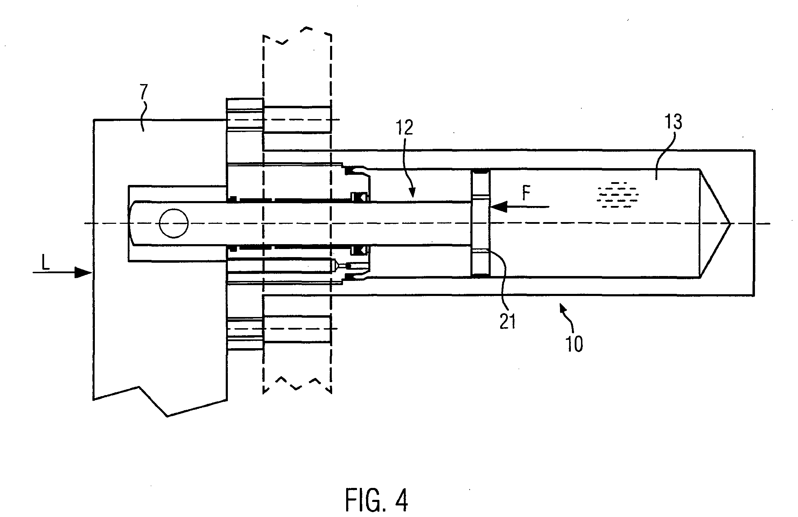

Figur 4 zeigt die erfindungsgemäße Dämpfereinheit 8 in einer Einschubstellung, bei welcher die Andockbaugruppe 7 gegen den Befestigungsflansch 19 geschoben ist. Bei der Figur 4 hat der Arbeitskolben 12 den gesamten Dämpfungsweg X zurückgelegt, wodurch die Andockbaugruppe 7 an dem Befestigungsflansch 9 anliegt. Dabei ist der Arbeitskolben 12 entsprechend der Länge des Dämpfungsweges X in den Zylinder 11 eingeschoben. Die Kompressionskraft auf das im Zylinder 11 vorgespannte Fluid 13 hat dadurch zugenommen, wodurch zusätzliche Energie im Fluid 13 gespeichert wird.

Bei der Figur 4 ist die von außen aufgebrachte Last L größer, als die durch das vorgespannte Fluid 13 ursprünglich aufgebrachte Kraft F. Dadurch wird der Arbeitskolben 12 in den Zylinder 11 geschoben. Der Arbeitskolben 12 wird dann vollständig in seine ursprüngliche Lage gemäß der Figur 3 zurückgestellt, wenn die von außen wirkende Kraft L unter die ursprünglich durch das Fluid 13 aufgebrachte Kompressionskraft F sinkt. Der Arbeitskolben 12 verfährt dann wieder in die Ausschubstellung, die in der Figur 3 gezeigt ist.

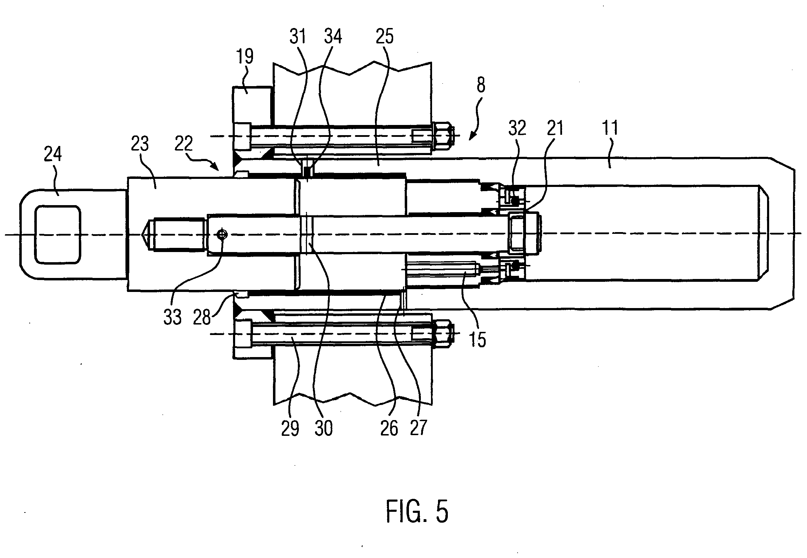

Figur 5 zeigt eine besondere Ausführungsform der erfindungsgemäßen Dämpfereinheit 8. Die Dämpfereinheit 8 weist einen Führungsabschnitt 22 auf. Der Führungsabschnitt 22 bildet eine Verlängerung des Zylinders 11. Der Führungsabschnitt 22 hat einen Führungskolben 23, der auf dem Arbeitskolben 12 aufgeschraubt ist. Der Führungskolben 23 hat einen Befestigungsstutzen 24, welcher an die Andockbaugruppe 7 gekoppelt werden kann. Der Führungsabschnitt 22 hat weiterhin einen Zylinderabschnitt 25, welcher eine Verlängerung des Zylinders 11 ist und den Führungskolben 23 darin verschiebbar aufnimmt. Im Zylinderabschnitt 25 ist eine Führungsbuchse 26 vorgesehen. Die Führungsbuchse 26 kleidet den Zylinderabschnitt 25 aus und sorgt für eine gleichmäßige Gleitbewegung des Führungskolbens 23.

Weiterhin ist im Führungsabschnitt 22 eine Entlüftungsbohrung 27 vorgesehen, die am Boden des Führungsabschnitts 22 im Zylinderabschnitt 25 ausgebildet ist. Alternativ dazu oder ergänzend könnte die Entlüftungsbohrung 27 auch im Führungskolben 23 ausgebildet sein. Gemäß der Figur 5 wird die Führungsbuchse 26 durch einen Abstreifer 28 im Führungsabschnitt 22 gesichert. Der Abstreifer 28 sorgt dafür, dass die Führungsbuchse 26 bei einer Bewegung des Arbeitskolbens 22 nicht aus dem Führungsabschnitt 22 rutscht. Der Abstreifer 28 kann als Formring ausgebildet sein und kann in einer Aufnahme des Zylinderabschnitts 25 einrasten.

Figur 5 zeigt weiterhin, dass der Befestigungsflansch 19 an den Führungsabschnitt 22 geschweißt ist. Mittels mehreren Schraubenverbindungen ist der Befestigungsflansch 19 an die Quertraverse 6 befestigt. Der Befestigungsflansch 19 ist aus einem Rechteckblech hergestellt, welches vorzugsweise die Maße 173 mm x 160 mm x 30 mm aufweist. In dem Befestigungsflansch 19 sind vorzugsweise 4 Bohrungen vorgesehen. Diese weisen vorzugsweise einen Durchmesser von 18 mm und einen Lochkreisdurchmesser von 110 mm auf. Vorzugsweise wird der Befestigungsflansch 19 mittels Sechskantschrauben 29 an der Quertraverse 6 angebracht.

Zur Montage des Führungskolbens 23 ist eine Montagebohrung 30 in der Kolbenstange 16 des Arbeitskolbens 12 vorgesehen, welche in Ausschubstellung des Arbeitskolbens 12 mit einer Gewindebohrung 31 fluchtet, die im Führungsabschnitt 22 vorgesehen ist. Bei der Montage des Führungskolbens 23 wird ein Bolzen durch die Gewindebohrung 31 und die Montagebohrung 30 geschoben, sodass der Arbeitskolben 12 relativ zum Führungsabschnitt 22 fixiert ist. Der Führungskolben 23 kann dann fest auf die Kolbenstange 16 des Arbeitskolbens 12 geschraubt werden. Nach dem Verschrauben und sichern wird der Bolzen wieder entfernt. Die Gewindebohrung 31 ist durch die Quertraverse 6 verdeckt und ist daher verschmutzungsgeschützt.

In der Kolbenplatte 17 des Arbeitskolbens 12 sind zwei Einwegeventile 32 vorgesehen. Diese können in eine Offenlage versetzt werden, wenn der Arbeitskolben 12 in den Zylinder 11 hinein schiebt. Bei einer Rückstellbewegung des Arbeitkolbens 12 schließen sie dann automatisch, sodass das Fluid 13 nur durch die Strömungskanäle 21 zurückströmen kann. Dadurch ist es möglich, dem Arbeitskolben 12 wenig Widerstand beim Einfahren in den Zylinder 11 entgegenzusetzen, wobei ein größerer Widerstand gegen die Rückstellbewegung des Arbeitkolbens 12 wirkt. Der Arbeitskolben 12 wird also langsam in seine ursprüngliche Position in der Ausschubstellung zurückbewegt.

Mit Bezugnahme auf Figur 5 hat die Kolbenstange 16 des Arbeitskolbens 12 vorzugsweise einen Durchmesser von 30 mm. Der Dämpfungsweg X beträgt vorzugsweise 80 mm. Die Anfangskraft auf den Arbeitskolben 12, die durch das vorgespannte Fluid 13 aufgebracht wird, liegt vorzugsweise im Bereich zwischen 200 N und 800 N, beträgt insbesondere jedoch 300 N bzw. 700 N. Die Blockkraft, d.h. die maximale Kompressionskraft durch das Fluid 13, welche erreicht wird, wenn der Arbeitskolben 12 den gesamten Dämpfungsweg X zurückgelegt hat, also vollständig eingefahren ist, liegt vorzugsweise in einem Bereich zwischen 7500 N und 8500 N, beträgt insbesondere jedoch 8000 N bzw. 8300 N.

Vorzugsweise ist der Durchmesser des Führungskolbens 23 90 mm. Der Führungskolben 23 ist auf die Kolbenstange 16 des Arbeitskolbens 12 geschraubt. Mittels eines Spannstiftes 33 ist der Führungskolben 23 auf der Kolbenstange 16 gesichert. Die Führungsbuchse 26 hat vorzugsweise die Maße 90 mm x 98 mm x 118 mm.

Im Betrieb, wenn eine Last L von außen auf die Andockbaugruppe 7 wirkt, fährt der Führungskolben 23 mitsamt des Arbeitskolbens 12 in die Kolbenzylindereinheit 10 ein, wobei der Arbeitskolben 12 in das vorgespannte Fluid 13 eintaucht. Das vorgespannte Fluid 13 übt ursprünglich einen Druck im Bereich von 30 bar bis 110 bar auf den Arbeitskolben 12 aus, wobei es insbesondere einen Druck von 43 bar (300N) bzw. 99 bar (700N) aufbringt.

Bedingt durch die Einwegeventile 32 in der Kolbenplatte 17 fährt der Arbeitskolben 12 mit recht geringem Widerstand ein und verdichtet das vorgespannte Fluid 13 während des Federweges um eine bestimmte Barzahl bis zur Blockkraft. Wird die von außen einwirkende Last L entfernt, schließen die Einwegeventile 32 und der Arbeitskolben 12 mitsamt des Führungskolbens 23 fährt langsam wieder in die Ausschubstellung zurück, weil das Fluid 13 jetzt beim Rücklauf nur noch durch die kleineren Strömungskanäle 21 gezwungen wird. Die Rückstellgeschwindigkeit ist abhängig vom Durchmesser der Strömungskanäle 21, welche je nach Ausführungsform unterschiedlich groß ausgebildet sein können bzw. variierbar sind.

In der zuvor erwähnten Gewindebohrung 31, welche zur Montage des Führungskolbens 23 verwendet wird, kann gemäß einer besonderen Ausführungsform ein Näherungssensor 34 befestigt sein, der dazu ausgebildet ist, das Andocken einer Last an der Andockbaugruppe 7 zu erfassen, indem er ein Einschieben des Führungskolbens 23 in den Führungsabschnitt 22 detektiert. Der Näherungssensor 34 kann mit einer nicht gezeigten Signalvorrichtung des Straßenfertigers 1 funktional verbunden sein, durch welche das Andocken eines LKWs an der erfindungsgemäßen Schubvorrichtung 4 einem Fahrzeugführer des Straßenfertigers 1 und/oder einem Fahrzeugführer des angedockten LKWs anzeigbar ist.

Figur 6 zeigt den Arbeitskolben 12 mit der Kolbenstange 16 und der Kolbenplatte 17. In der Kolbenplatte 17 sind die Einwegeventile 32 als Kugelventile ausgebildet. Innerhalb der Einwegeventile 32 sind die Strömungskanäle 21 vorgesehen. Die Kolbenplatte 17 weist entlang ihrem Umfang die Plattendichtung 18 auf. Die Kolbenstange 16 hat einen ersten Gewindeabschnitt 35, auf welchen der Führungskolben 23 aufschraubbar ist, und einen am entgegengesetzten Ende vorgesehenen zweiten Gewindeabschnitt 36. Eine Schraubenmutter 37 befestigt die Kolbenplatte 18 auf dem Gewindeabschnitt 36. Ebenfalls zeigt die Figur 6 die Montagebohrung 30, um den Arbeitskolben 12 bei der Montage des Führungskolbens 23 zu fixieren.

Die Figur 7 zeigt ein Kraft-Weg-Diagramm für eine erfindungsgemäße Dämpfereinheit. Charakteristisch ist eine Anfangskraft von 300 N, die in der Ausschubstellung auf den Arbeitskolben 12 wirkt, und eine Blockkraft von 8000 N, die auf den Arbeitskolben 12 in der Einschubstellung wirkt, wenn der Arbeitskolben 12 den kompletten Dämpfungsweg X zurückgelegt hat. Gemäß der Figur 7 beträgt der Dämpfungsweg X 80 mm. Dabei stellt sich eine Federrate von 962,5 N/mm ein.

Durch die erfindungsgemäße Schubvorrichtung können hervorragend große Lasten abgedämpft werden, wobei durch sie ein Energieanstieg gut speicherbar ist und kontrolliert wieder abgegeben werden kann. Mit der erfindungsgemäßen Schubvorrichtung ist es möglich, einen daran andockenden LKW abzubremsen, ohne dass durch den Andockvorgang Beschleunigungen auf den Straßenfertiger übertragen werden. Nach der Materialübergabe kann der LKW problemlos abdocken, wodurch die erfindungsgemäße Schubvorrichtung wieder in ihre Ausgangsstellung zurückkehrt.

Erfindungsgemäß kann die Schubvorrichtung 4 genauso gut an einem Beschickerfahrzeug vorgesehen sein, welches an einen LKW zur Materialübergabe andockt.

## Patentansprüche

1. Straßenfertiger (1) oder Beschicker mit einer Schubvorrichtung (4), die mindestens eine Andockbaugruppe (7) und mindestens eine Dämpfereinheit (8) aufweist, wobei die Dämpfereinheit (8) am Chassis (5) des Straßenfertigers (1) oder Beschickers befestigt ist und mindestens eine Kolbenzylindereinheit (10) hat, die einen Zylinder (11) und einen darin verschiebbaren Arbeitskolben (12) aufweist, der die Kolbenzylindereinheit (10) in mindestens eine erste und eine zweite Kammer unterteilt und mit der Andockbaugruppe (7) gekoppelt ist, wobei die Andockbaugruppe (7) durch den verschiebbar gelagerten Arbeitskolben (12) relativ zum Chassis (5) zwischen einer Ausschubstellung und mindestens einer Einschubstellung positionierbar ist,
**dadurch gekennzeichnet, dass**
die Kolbenzylindereinheit (10) geschlossen ist und in der Kolbenzylindereinheit (10) mindestens ein Strömungskanal (21) zwischen der ersten und der zweiten Kammer zum Durchströmen für ein in der Kolbenzylindereinheit (10) eingeschlossenes, kompressibles Fluid (13) vorgesehenen ist, wobei das Fluid (13) in der Ausschubstellung vorgespannt ist.

2. Straßenfertiger oder Beschicker nach Anspruch 1, **dadurch gekennzeichnet, dass** das vorgespannte Fluid (13) ein Silikon ist.

3. Straßenfertiger oder Beschicker nach Anspruch 1 oder 2, **dadurch gekennzeichnet, dass** der Strömungskanal (21) im Arbeitskolben (12) ausgebildet ist.

4. Straßenfertiger oder Beschicker nach einem der vorigen Ansprüche, **dadurch gekennzeichnet, dass** in der Kolbenzylindereinheit (10) mindestens ein Einwegeventil (32) zum Durchströmen für das in der Kolbenzylindereinheit (10) eingeschlossene Fluid (13) vorgesehenen ist, wenn der Arbeitskolben (12) in Richtung der Einschubstellung drückt.

5. Straßenfertiger oder Beschicker nach Anspruch 4, **dadurch gekennzeichnet, dass** das Einwegeventil (32) mehr von dem Fluid (13) durchläßt, als der Strömungskanal (21), wenn der Arbeitskolben (12) in Richtung der Einschubstellung drückt.

6. Straßenfertiger oder Beschicker nach einem der vorigen Ansprüche, **dadurch gekennzeichnet, dass** eine Durchflußmenge durch das Einwegeventil (32) und/oder den Strömungskanal (21) variierbar ist.

7. Straßenfertiger oder Beschicker nach einem der vorigen Ansprüche, **dadurch gekennzeichnet, dass** die Kolbenzylindereinheit (10) einen Führungsabschnitt (22) mit einem Führungskolben (23) aufweist, der auf dem Arbeitskolben (12) befestigt ist.

8. Straßenfertiger oder Beschicker nach Anspruch 7, **dadurch gekennzeichnet, dass** im Führungsabschnitt (22) mindestens eine Entlüftungsbohrung (27) vorgesehen ist.

9. Straßenfertiger oder Beschicker nach Anspruch 7 oder 8, **dadurch gekennzeichnet, dass** im Arbeitskolben (12) eine Montagebohrung (30) vorgesehen ist, um den Arbeitskolben (12) zur Montage des Führungskolbens (23) zu fixieren.

10. Straßenfertiger oder Beschicker nach einem der Ansprüche 7 bis 9, **dadurch gekennzeichnet, dass** der Führungsabschnitt (22) eine Führungsbuchse (26) aufweist, innerhalb welcher der Führungskolben (23) verschiebbar ist.

11. Straßenfertiger oder Beschicker nach Anspruch 10, **dadurch gekennzeichnet, dass** die Führungsbuchse (26) zumindest teilweise aus Polyoxymethylen (POM) hergestellt ist.

12. Straßenfertiger oder Beschicker nach Anspruch 10 oder 11, **dadurch gekennzeichnet, dass** im Führungsabschnitt (22) ein Abstreifer (28) vorgesehen ist, der die Führungsbuchse (26) im Führungsabschnitt (22) sichert.

13. Straßenfertiger oder Beschicker nach einem der vorigen Ansprüche, **dadurch gekennzeichnet, dass** das Fluid mit einem Druck im Bereich von 30 bar bis 110 bar, insbesondere von 43 bar bzw. 99 bar vorgespannt ist.

14. Straßenfertiger oder Beschicker nach einem der vorigen Ansprüche, **dadurch gekennzeichnet, dass** die Kolbenzylindereinheit (10) ein Kolbenlager (14) aufweist, welches den Arbeitskolben (12) führt.

15. Straßenfertiger oder Beschicker nach einem der vorigen Ansprüche, **dadurch gekennzeichnet, dass** im Kolbenlager (14) ein Ventil (15) vorgesehen ist, durch welches die Kolbenzylindereinheit (10) mit dem Fluid (13) befüllbar ist.

16. Straßenfertiger oder Beschicker nach einem der vorigen Ansprüche, **dadurch gekennzeichnet, dass** am Straßenfertiger (1) oder am Beschicker mindestens eine Sensoreinheit (38) vorgesehen ist, die dazu ausgebildet ist, eine Stellung der Schubvorrichtung (4), insbesondere eine Stellung der Andockbaugruppe (7) relativ zum Chassis (5) und/oder eine Stellung des Arbeitskolbens (12) zu erfassen.

17. Straßenfertiger oder Beschicker nach Anspruch 16, **dadurch gekennzeichnet, dass** die Sensoreinheit (38) mit einer Signalvorrichtung (39) funktional verbunden ist, um einen Andockzustand optisch und/oder akustisch anzuzeigen und/oder Manövrieranweisungen für einen Bediener des Straßenfertigers (1), des Beschickers und/oder eines angedockten LKWs anzuzeigen.

18. Straßenfertiger nach einem der vorigen Ansprüche, **dadurch gekennzeichnet, dass** der Straßenfertiger (1) dazu ausgebildet ist, automatisch mindestens einen Einbauparameter und/oder eine Einbauantriebsstellung zu verstellen, wenn am Straßenfertiger ein Materiallieferfahrzeug angedockt hat und/oder die Schubvorrichtung (4), insbesondere die Andockbaugruppe (7) relativ zum Chassis (5) eine vorbestimmte Stellung einnimmt und/oder einen vorbestimmten Dämpfungsweg X zurücklegt.

19. Verfahren zum Dämpfen einer Last, die auf eine Dämpfereinheit (8) einer Schubvorrichtung (4) eines Straßenfertigers (1) wirkt, wobei auf einen Arbeitskolben (12) einer zur Dämpfereinheit 8 gehörenden, geschlossenen Kolbenzylindereinheit 10 in Ausschubstellung eine von einem in der Dämpfereinheit (8) eingeschlossenen kompressiblen Fluid (13) verursachte Vorspannkraft wirkt, welche den Arbeitskolben (12) in Richtung der Ausschubstellung drückt, wobei der Arbeitskolben (12) von einer Last, die der Vorspannkraft entgegenwirkt und diese übersteigt in die Dämpfereinheit (8) gedrückt wird, sodass die im Fluid (13) vorhandene Vorspannkraft ansteigt, und wobei das Fluid (13) durch mindestens einen in der Kolbenzylindereinheit (10) vorgesehenen Strömungskanal (21) strömt, sodass es von einer ersten Kammer, in welcher das Fluid (13) nahezu vollständig in der Ausschubstellung ist, in eine zweite Kammer der Kolbenzylindereinheit (10) verdrängt wird, welche dadurch entsteht, dass der Arbeitskolben (12) in die Kolbenzylindereinheit (10) einfährt, wobei der Arbeitskolben (12) selbsttätig wieder in die Ausschubstellung zurückkehrt, wenn die Last auf den Arbeitskolben (12) nachläßt.

## Claims

1. Road finishing machine (1) or charger vehicle with a pushing device (4), comprising at least one docking assembly (7) and at least one absorber unit (8), the absorber unit (8) being fixed to the chassis (5) of the road finishing machine (1) or the charger vehicle and comprising at least one piston-cylinder unit (10) which comprises a cylinder (11) and a working piston (12) movable therein which subdivides the piston-cylinder unit (10) into at least one first and one second chamber and is coupled to the docking assembly (7), wherein the docking assembly (7) may be positioned relative to the chassis (5) between an extended position and at least one retracted position by the movably mounted working piston (12),
**characterized in that**
the piston-cylinder unit (10) is closed and at least one flow channel (21) is provided in the piston-cylinder unit (10) between the first and the second chambers for letting a fluid (13) enclosed in the piston-cylinder unit (10) pass through it, wherein the fluid (13) being prestressed in the extended position.

2. Road finishing machine or charger vehicle according to claim 1, **characterized in that** the prestressed fluid (13) is a silicone.

3. Road finishing machine or charger vehicle according to claim 1 or 2, **characterized in that** the flow channel (21) is embodied in the working piston (12).

4. Road finishing machine or charger vehicle according to one of the preceding claims,
**characterized in that** at least one one-way valve (32) is provided in the piston-cylinder unit (10) for letting the fluid (13) enclosed in the piston-cylinder unit (10) pass through it when the working piston (12) pushes in the direction of the retracted position.

5. Road finishing machine or charger vehicle according to claim 4, **characterized in that** the one-way valve (32) lets more of the fluid (13) pass than the flow channel (21) when the working piston (12) pushes in the direction of the retracted position.

6. Road finishing machine or charger vehicle according to one of the preceding claims;
**characterized in that** a flow rate through the one-way valve (32) and/or the flow channel (21) is variable.

7. Road finishing machine or charger vehicle according to one of the preceding claims,
**characterized in that** the piston-cylinder unit (10) comprises a guiding section (22) with a guiding piston (23) which is fixed on the working piston (12).

8. Road finishing machine or charger vehicle according to claim 7, **characterized in that** at least one vent hole (27) is provided in the guiding section (22).

9. Road finishing machine or charger vehicle according to claim 7 or 8, **characterized in that** a mounting bore (30) is provided in the working piston (12) for fixing the working piston (12) for assembling the guiding piston (23).

10. Road finishing machine or charger vehicle according to one of claims 7 to 9,
**characterized in that** the guiding section (22) comprises a guiding bushing (26) within which the guiding piston (23) is movable.

11. Road finishing machine or charger vehicle according to claim 10, **characterized in that** the guiding bushing (26) is at least partially made of polyoxymethylene (POM).

12. Road finishing machine or charger vehicle according to claim 10 or 11, **characterized in that** in the guiding section (22), a scraper (28) is provided which secures the guiding bushing (26) in the guiding section (22).

13. Road finishing machine or charger vehicle according to one of the preceding claims,
**characterized in that** the fluid is prestressed with a pressure within a range of 30 bar to 110 bar, in particular of 43 bar or 99 bar.

14. Road finishing machine or charger vehicle according to one of the preceding claims,
**characterized in that** the piston-cylinder unit (10) comprises a piston bearing (14) which guides the working piston (12).

15. Road finishing machine or charger vehicle according to one of the preceding claims,
**characterized in that** in the piston bearing (14), a valve (15) is provided through which the piston-cylinder unit (10) may be filled with the fluid (13).

16. Road finishing machine or charger vehicle according to one of the preceding claims,
**characterized in that** at the road finishing machine (1) or at the charger vehicle, at least one sensor unit (38) is provided which is embodied for detecting a position of the pushing device (4), in particular a position of the docking assembly (7) relative to the chassis (5) and/or a position of the working piston (12).

17. Road finishing machine or charger vehicle according to claim 16, **characterized in that** the sensor unit (38) is operatively linked with a signal device (39) for optically and/or acoustically indicating a docking state and/or displaying maneuvering instructions for an operator of the road finishing machine (1), the charger vehicle and/or a docked truck.

18. Road finishing machine according to one of the preceding claims, **characterized in that** the road finishing machine (1) is embodied for automatically adjusting at least one paving parameter and/or one paving drive position if a material supply vehicle has docked to the road finishing machine, and/or the pushing device (4), in particular the docking assembly (7), takes a predetermined position relative to the chassis (5) and/or covers a predetermined damping path X.

19. Method for cushioning a load acting on an absorber unit (8) of a pushing device (4) of a road finishing machine (1), wherein a prestressing force caused by a compressible fluid locked in the absorber unit (8) is acting on a working piston (12) of a closed, piston-cylinder unit (10) of the absorber unit (8) in an extended position, which force pushes the working piston (12) in the direction of the extended position, while the working piston (12) is being pushed into the absorber unit (8) by a load counteracting and exceeding the prestressing force, so that the prestressing force present in the fluid (13) increases, and wherein the fluid (13) flows through at least one flow channel (21) provided in the piston-cylinder unit (10), so that it is displaced from a first chamber, in which the fluid (13) is nearly completely in the extended position, into a second chamber of the piston-cylinder unit (10) which is formed by the working piston (12) driving into the piston-cylinder unit (10), wherein the working piston (12) automatically returns to the extended position when the load on the working piston (12) is relieved.

## Revendications

1. Finisseur de route (1) ou alimentateur comportant un dispositif de poussée (4), qui comprend au moins un groupe de tamponnement (7) et au moins une unité d'amortissement (8), finisseur de route dans lequel l'unité d'amortissement (8) est fixée au châssis (5) du finisseur de route (1) ou de l'alimentateur, et possède au moins une unité à piston et cylindre (10) comprenant un cylindre (11) et un piston de travail (12) qui peut y coulisser, subdivise l'unité à piston et cylindre (10) en au moins une première et une deuxième chambre, et qui est couplé au groupe de tamponnement (7), et
dans lequel le groupe de tamponnement (7) peut, grâce au piston de travail (12) monté coulissant, être positionné par rapport au châssis (5), entre une position sortie et au moins une position rentrée,
**caractérisé en ce que**
l'unité à piston et cylindre (10) est fermée, et dans l'unité à piston et cylindre (10) est prévu au moins un canal d'écoulement (21) entre la première et la deuxième chambre pour assurer un passage d'écoulement d'un fluide compressible (13) enfermé dans l'unité à piston et cylindre (10), le fluide (13) étant sous précontrainte dans la position sortie.

2. Finisseur de route ou alimentateur selon la revendication 1, **caractérisé en ce que** le fluide (13) sous précontrainte est un silicone.

3. Finisseur de route ou alimentateur selon la revendication 1 ou la revendication 2, **caractérisé en ce que** le canal d'écoulement (21) est réalisé dans le piston de travail (12).

4. Finisseur de route ou alimentateur selon l'une des revendications précédentes, **caractérisé en ce que** dans l'unité à piston et cylindre (10) est prévue au moins une valve unidirectionnelle (32) pour assurer le passage d'écoulement du fluide (13) enfermé dans l'unité à piston et cylindre (10), lorsque le piston de travail (12) pousse dans la direction de la position rentrée.

5. Finisseur de route ou alimentateur selon la revendication 4, **caractérisé en ce que** la valve unidirectionnelle (32) laisse passer plus du fluide (13) que le canal d'écoulement (21), lorsque le piston de travail (12) pousse dans la direction de la position rentrée.

6. Finisseur de route ou alimentateur selon l'une des revendications précédentes, **caractérisé en ce qu'**il est possible de faire varier un débit d'écoulement à travers la valve unidirectionnelle (32) et/ou le canal d'écoulement (21).

7. Finisseur de route ou alimentateur selon l'une des revendications précédentes, **caractérisé en ce que** l'unité à piston et cylindre (10) comprend un tronçon de guidage (22) avec un piston de guidage (23), qui est fixé sur le piston de travail (12).

8. Finisseur de route ou alimentateur selon la revendication 7, **caractérisé en ce que** dans le tronçon de guidage (22) est prévu au moins un perçage de purge d'air (27).

9. Finisseur de route ou alimentateur selon la revendication 7 ou la revendication 8, **caractérisé en ce que** dans le piston de travail (12) est prévu un perçage de montage (30) en vue de fixer le piston de travail (12) pour le montage du piston de guidage (23).

10. Finisseur de route ou alimentateur selon l'une des revendications 7 à 9, **caractérisé en ce que** le tronçon de guidage (22) présente un coussinet de guidage (26) à l'intérieur duquel peut coulisser le piston de guidage (23).

11. Finisseur de route ou alimentateur selon la revendication 10, **caractérisé en ce que** le coussinet de guidage (26) est fabriquée au moins en partie en polyoxyméthylène (POM).

12. Finisseur de route ou alimentateur selon la revendication 10 ou la revendication 11, **caractérisé en ce que** dans le tronçon de guidage (22) est prévu un racleur (28), qui assure l'arrêt du coussinet de guidage (26) dans le tronçon de guidage (22).

13. Finisseur de route ou alimentateur selon l'une des revendications précédentes, **caractérisé en ce que** le fluide est précontraint avec une pression dans une plage de 30 bar à 110 bar, notamment de 43 bar respectivement de 99 bar.

14. Finisseur de route ou alimentateur selon l'une des revendications précédentes, **caractérisé en ce que** l'unité à piston et cylindre (10) comprend un palier de piston (14), qui guide le piston de travail (12).

15. Finisseur de route ou alimentateur selon l'une des revendications précédentes, **caractérisé en ce que** dans le palier de piston (14) est prévue une valve (15) à travers laquelle l'unité à piston et cylindre (10) peut être remplie avec le fluide (13).

16. Finisseur de route ou alimentateur selon l'une des revendications précédentes, **caractérisé en ce que** sur le finisseur de route (1) ou l'alimentateur est prévue au moins une unité de capteur (38), qui est conçue pour relever une position du dispositif de poussée (4), notamment une position du groupe de tamponnement (7) par rapport au châssis (5), et/ou une position du piston de travail (12).

17. Finisseur de route ou alimentateur selon la revendication 16, **caractérisé en ce que** l'unité de capteur (38) est reliée fonctionnellement avec un dispositif de signalisation (39) pour indiquer de manière optique et/ou acoustique un état de tamponnement, et/ou indiquer des instructions de manoeuvre pour un utilisateur du finisseur de route (1), de l'alimentateur et/ou d'un camion y ayant accosté.

18. Finisseur de route selon l'une des revendications précédentes, **caractérisé en ce que** le finisseur de route (1) est conçu pour régler automatiquement au moins un paramètre de pose et/ou une position d'entraînement de pose, lorsqu'un véhicule de fourniture de matériau a accosté le finisseur de route, et/ou lorsque le dispositif de poussée (4), notamment le groupe de tamponnement (7) prend une position prédéterminée par rapport au châssis (5) et/ou effectue une course d'amortissement X prédéterminée.

19. Procédé pour amortir une charge agissant sur une unité d'amortissement (8) d'un dispositif de poussée (4) d'un finisseur de route (1), procédé
d'après lequel sur un piston de travail (12) d'une unité à piston et cylindre fermée (10) appartenant à l'unité d'amortissement (8), agit, en direction de la position sortie, une force de précontrainte produite par un fluide compressible (13) enfermé dans l'unité d'amortissement (8), qui pousse le piston de travail (12) en direction de la position sortie,
d'après lequel le piston de travail (12) est pressé dans l'unité d'amortissement (8) par une charge, qui agit à l'encontre de la force de précontrainte et dépasse celle-ci, de sorte que la force de précontrainte existant dans le fluide (13) augmente, et
d'après lequel le fluide (13) s'écoule à travers au moins un canal d'écoulement (21) prévu dans l'unité à piston et cylindre (10), de sorte qu'il est refoulé d'une première chambre, dans laquelle se trouve pratiquement la totalité du fluide (13) dans la position sortie, vers une deuxième chambre de l'unité à piston et cylindre (10), qui se forme par le fait que le piston de travail (12) rentre dans l'unité à piston et cylindre (10), et
d'après lequel le piston de travail (12) retourne automatiquement à nouveau dans la position sortie, lorsque la charge sur le piston de travail (12) diminue.
